# EUROPEAN PATENT APPLICATION

(11) **EP 3 617 649 A1**
(43) Date of publication of application: **04.03.2020**
(21) Application number: 19192209.5
(22) Date of filing: 19.08.2019
(51) Int. Cl.: G01C 21/30, G01C 21/28, G05D 1/02

(54) **HIGH-PRECISION MAP GENERATION METHOD, DEVICE AND COMPUTER DEVICE**

(30) Priority: 30.08.2018 CN 201811004098
(71) Applicant: Baidu Online Network Technology (Beijing) Co., Ltd., Beijing 100085 (CN)
(72) Inventor: SHI, Yifeng, Haidian District, Beijing 100085 (CN); TAO, Sheng, Haidian District, Beijing 100085 (CN); CAO, Huo, Haidian District, Beijing 100085 (CN); WANG, Haisong, Haidian District, Beijing 100085 (CN); TAO, Ji, Haidian District, Beijing 100085 (CN)
(74) Representative: Zumstein, Angela

(57) **Abstract**

The present disclosure provides a high-precision map generation method, device, and computer device. The method includes: obtaining a local high-precision map in an autonomous vehicle and a destination of the autonomous vehicle, determining whether there is a high-precision map corresponding to a front road section according to the destination and the local high-precision map, and when there is no high-precision map corresponding to the front road section, prompting the driver to switch to a manual driving mode, and after the autonomous vehicle enters the front road section, collecting map information by a radar and a camera of the autonomous vehicle, and generating the high-precision map according to the map information.

## Description

### TECHNICAL FIELD

The present disclosure relates to an artificial intelligence technology field, and more particularly, to a high-precision map generation method, a high-precision map generation device and a computer device.

### BACKGROUND

With the continuous development of intelligent transportation technology, automobile intellectualization technology is gradually being widely applied, and autonomous vehicles become a hot research topic. At present, autonomous vehicle technology uses a video camera, a radar sensor, and a laser range finder to know ambient traffic conditions and navigate on the road ahead through a high-precision map, thus achieving automatic driving.

However, due to geographical diversity, not all roads have corresponding high-precision maps. Therefore, when there is no high-precision map on the road where the autonomous vehicle travels, the positioning, perception and planning control of the autonomous vehicle will be greatly limited, and thus automatic driving cannot be realized.

### SUMMARY

The present disclosure aims to solve at least one of the above problems to at least some extent.

The present disclosure provides a high-precision map generation method, a high-precision map generation device and a computer device, to realize safe driving when front road condition cannot be automatically determined, in the case that there is no corresponding high-precision map on a front road section where an autonomous vehicle travels.

Embodiments of a first aspect of the present disclosure provide a high-precision map generation method, including:
obtaining a local high-precision map in an autonomous vehicle;
obtaining a destination of the autonomous vehicle;
determining whether there is a high-precision map corresponding to a front road section according to the destination and the local high-precision map; and
when there is no high-precision map corresponding to the front road section, prompting a driver of the autonomous vehicle to switch to a manual driving mode, and after the autonomous vehicle enters the front road section, collecting map information by a radar and a camera of the autonomous vehicle, and generating the high-precision map according to the map information.

With the high-precision map generation method of embodiments of the present disclosure, the local high-precision map in the autonomous vehicle and the destination of the autonomous vehicle are obtained, and further, it is determined whether there is a corresponding high-precision map on the front road section according to the destination and the local high-precision map, and when there is no corresponding high-precision map on the front road section, the driver is prompted to switch to the manual driving mode, and after the autonomous vehicle enters the front road section, map information is collected by the radar and the camera of the autonomous vehicle, and the high-precision map is generated according to the collected map information. Therefore, by obtaining the destination of the autonomous vehicle and the local high-precision map, when it is determined that there is no corresponding high-precision map on the front road section, map information is further collected to generate the high-precision map, such that the use area of the high-precision map is expanded, and the driving safety of the vehicle is improved, which is more advantageous to the popularization of autonomous vehicles and the improvement of urban traffic conditions.

Embodiments of a second aspect of the present disclosure provide another high-precision map generation method, including:
obtaining a high-precision map reported by an autonomous vehicle;
obtaining road information corresponding to the high-precision map, and generating a corresponding navigation map according to the road information;
scoring the high-precision map according to the navigation map; and
when a scoring value of the high-precision map is greater than a preset threshold, saving the high-precision map.

With the high-precision map generation method of embodiments of the present disclosure, the high-precision map reported by the autonomous vehicle is obtained, and road information corresponding to the high-precision map is obtained, and then the corresponding navigation map is obtained according to the road information, and the high-precision map is further scored according to the navigation map. When the scoring value of the high-precision map is greater than the preset threshold, the high-precision map is saved. Therefore, when there is no corresponding high-precision map on an area, by uploading the high-precision map collected by the autonomous vehicle to the server, and scoring the high-precision map according to the navigation map, the high-precision map conforming to the standard can be obtained, and the collection capability of the high-precision map is improved, such that the corresponding area of the high-precision map is expanded, which is advantageous to the popularization of the autonomous vehicles.

Embodiment of a third aspect of the present disclosure provides a high-precision map generation device, including:
a first obtaining module, configured to obtain a local high-precision map in an autonomous vehicle;
a second obtaining module, configured to obtain a destination of the autonomous vehicle;
a determining module, configured to determine whether there is a high-precision map corresponding to a front road section according to the destination and the local high-precision map; and
a generating module, configured to prompt a driver of the autonomous vehicle to switch to a manual driving mode when there is no high-precision map corresponding to the front road section, and generate a high-precision map according to map information collected by a radar and a camera of the autonomous vehicle after the autonomous vehicle enters the front road section.

With the high-precision map generation device of the embodiments of the present disclosure, the local high-precision map in the autonomous vehicle and the destination of the autonomous vehicle are obtained, and further, it is determined whether there is a corresponding high-precision map on the front road section according to the destination and the local high-precision map, and when there is no corresponding high-precision map on the front road section, the driver is prompted to switch to the manual driving mode, and after the autonomous vehicle enters the front road section, map information is collected by the radar and the camera of the autonomous vehicle, and the high-precision map is generated according to the collected map information. Therefore, by obtaining the destination of the autonomous vehicle and the local high-precision map, when it is determined that there is no corresponding high-precision map on the front road section, map information is further collected to generate the high-precision map, such that the use area of the high-precision map is expanded, and the driving safety of the vehicle is improved, which is more advantageous to the popularization of autonomous vehicles and the improvement of urban traffic conditions.

Embodiment of a fourth aspect of the present disclosure provides a high-precision map generation device, including:
a first obtaining module, configured to obtain a high-precision map reported by an autonomous vehicle;
a second obtaining module, configured to obtain road information corresponding to the high-precision map, and obtain a corresponding navigation map according to the road information;
a processing module, configured to score the high-precision map according to the navigation map; and
a saving module, configured to save the high-precision map when a scoring value of the high-precision map is greater than a preset threshold.

With the high-precision map generation device of embodiments of the present disclosure, the high-precision map reported by the autonomous vehicle is obtained, and road information corresponding to the high-precision map is obtained, and then the corresponding navigation map is obtained according to the road information, and the high-precision map is further scored according to the navigation map. When the scoring value of the high-precision map is greater than the preset threshold, the high-precision map is saved. Therefore, when there is no corresponding high-precision map on an area, by uploading the high-precision map collected by the autonomous vehicle to the server, and scoring the high-precision map according to the navigation map, the high-precision map conforming to the standard can be obtained, and the collection capability of the high-precision map is improved, such that the corresponding area of the high-precision map is expanded, which is advantageous to the popularization of the autonomous vehicles.

Embodiment of a fifth aspect of the present disclosure provides a computer device. The computer device includes: a memory, a processor, and a computer program stored on the memory and operable on the processor. When the computer program is executed by the processor, the high-precision map generation method as described in the above embodiments is implemented.

Embodiment of a sixth aspect of the present disclosure provides a non-transitory computer readable storage medium having a computer program stored thereon. When the computer program is executed by a processor, the high-precision map generation method as described in the above embodiments is implemented.

Embodiment of a seventh aspect of the present disclosure provides a computer program product. When instructions in the computer program product are executed by a processor, the high-precision map generation method as described in the above embodiments is implemented.

Additional aspects and advantages of the present disclosure will be given in part in the following descriptions, become apparent in part from the following descriptions, or be learned from the practice of the embodiments of the present disclosure.

### BRIEF DESCRIPTION OF THE DRAWINGS

These and other aspects and/or advantages of embodiments of the present disclosure will become apparent and more readily appreciated from the following descriptions made with reference to the accompanying drawings, in which:
FIG. 1 is a schematic flowchart of a high-precision map generation method according to embodiments of the present disclosure.
FIG. 2 is a schematic flowchart of another high-precision map generation method according to embodiments of the present disclosure.
FIG. 3 is a schematic flowchart of yet another high-precision map generation method according to embodiments of the present disclosure.
FIG. 4 is a schematic block diagram of a high-precision map generation device according to embodiments of the present disclosure.
FIG. 5 is a schematic block diagram of another high-precision map generation device according to embodiments of the present disclosure.
FIG. 6 is a block diagram illustrating an exemplary computer device suitable for use in implementing embodiments of the present disclosure.

### DETAILED DESCRIPTION

Embodiments of the present disclosure will be described in detail and examples of embodiments are illustrated in the drawings. The same or similar elements and the elements having the same or similar functions are denoted by like reference numerals throughout the descriptions. Embodiments described herein with reference to drawings are explanatory, serve to explain the present disclosure, and are not construed to limit embodiments of the present disclosure.

In the related art, an autonomous vehicle uses a video camera, a radar sensor, and a laser range finder to know ambient traffic condition and navigate on a road ahead with a high-precision map. Therefore, when there is no high-precision map on the road section, positioning, perception and planning control functions of the autonomous vehicle are limited, which makes automatic driving impossible. However, due to geographical diversity, many places may not have corresponding high-precision maps, which affects the promotion of autonomous vehicles.

In view of the above problems, embodiments of the present disclosure provide a high-precision map generation method, which obtains a local high-precision map in the autonomous vehicle and a destination of the autonomous vehicle, determines whether there is a corresponding high-precision map on a front road section according to the destination and the local high-precision map, and when there is no corresponding high-precision map on the front road section, prompts a driver of the autonomous vehicle to switch to a manual driving mode, and after the autonomous vehicle enters the front road section, collects map information by a radar and a camera of the autonomous vehicle, and generates a high-precision map according to the map information.

The high-precision map generation method and device of embodiments of the present disclosure will be described below with reference to the accompanying drawings.

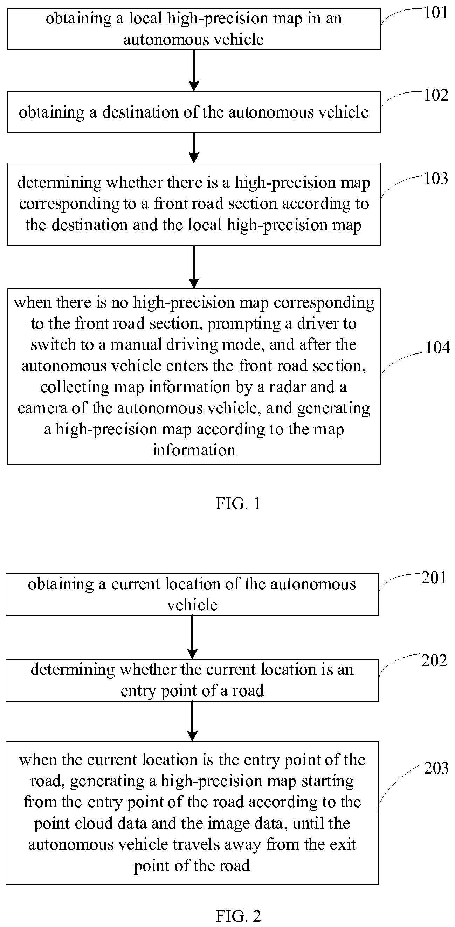

FIG. 1 is a schematic flowchart of a high-precision map generation method according to an embodiment of the present disclosure.

As illustrated in FIG. 1, the high-precision map generation method includes the following steps.

At step 101, a local high-precision map in an autonomous vehicle is obtained.

The autonomous vehicle is also known as a driverless car, a computer-driven car or a wheeled mobile robot, which is a smart car that is driven by a computer system to realize unmanned driving. The autonomous vehicle uses a video camera, a radar sensor, and a laser range finder to know the ambient traffic condition while driving, and to navigate on the road ahead through the local high-precision map. However, currently, the autonomous vehicle is equipped with a driver who grasps the steering wheel in an emergency during driving, so that when an abnormality occurs in the autonomous vehicle, it can be switched to the manual driving mode to avoid an accident.

It should be noted that, the high-precision map suitable for the autonomous vehicle is different from the ordinary electronic map used for navigation in daily life. The high-precision map contains more abundant and detailed data information, which can be divided into dynamic and static data information. The static data information includes not only basic two-dimensional road data, such as lane markings, surrounding infrastructure, but also quasi-static data such as traffic control, road construction, and wide-area meteorology. The dynamic data information includes accidents, road congestion and rapidly changing dynamic information data such as surrounding vehicles, pedestrians and signal lights. In addition, unlike ordinary maps that are updated every months or even years, high-precision maps must maintain an update rate of minutes, or even seconds. Moreover, high-precision maps have higher positioning accuracy than ordinary electronic maps. For example, GPS navigation currently used on mobile phones generally has a precision of 5 to 10 meters, and the accuracy in underground tunnels or in densely populated areas is even lower. High-precision maps required for autonomous driving technology require centimeter-level accuracy.

In the embodiments of the present disclosure, the autonomous vehicle obtains local high-precision map information of the autonomous vehicle during driving from the server. The local high-precision map is continuously updated according to the surrounding environment of the autonomous vehicle while driving, and the update speed is maintained at the minute level or even the second level.

At step 102, a destination of the autonomous vehicle is obtained.

Specifically, before the autonomous vehicle starts driving, the user inputs the destination in the navigator, and the autonomous vehicle can obtain the destination through a processor.

At step 103, it is determined whether there is a high-precision map corresponding to a front road section according to the destination and the local high-precision map.

In the embodiments of the present disclosure, the local high-precision map is updated in real time, so that the front road section of the autonomous vehicle can be detected, and then it can be determined whether the front road section has a corresponding high-precision map according to the acquired destination of the autonomous vehicle and the local high-precision map. When there is the high-precision map corresponding to the front road section which is to be traveled by the vehicle, the current driving mode is acquired, and when the current driving mode is an automatic driving mode, the automatic driving mode is maintained for continue driving. When there is no high-precision map corresponding to the front road section which is to be traveled by the vehicle, Step 104 is performed sequentially.

At step 104, where there is no high-precision map corresponding to the front road section, a driver of the autonomous vehicle is prompted to switch to a manual driving mode, and after the autonomous vehicle enters the front road section, map information is collected by a radar and a camera of the autonomous vehicle, and a high-precision map is generated according to the map information.

The map information includes point cloud data and image data collected by the radar and the camera. The point cloud data is recorded in a form of points after radar scanning. Each point contains a three-dimensional coordinate, and some points may contain color information and reflection intensity information.

In the embodiments of the present disclosure, when it is detected that the front road section which is to be traveled by the autonomous vehicle does not have a corresponding high-precision map, the current driving mode is acquired, and when the current driving mode is the automatic driving mode, the driver is prompted to switch to the manual driving mode. The manual driving mode refers to a driving mode that requires the driver to operate.

Further, after the autonomous vehicle enters the section without a corresponding high-precision map in front, the point cloud data and the image data are collected by the radar and the camera in the autonomous vehicle, and the point cloud data and the image data are combined to generate the corresponding high-precision map. Further, the generated high-precision map is sent to the server, and the server scores the high-precision map according to the navigation map corresponding to the front road section. When the scoring value is greater than the preset threshold, the server uses the high-precision map. The preset threshold refers to a preset value for determining whether the high-precision map reported by the autonomous vehicle meets the standard.

As another possible implementation, when the server scores the high-precision map reported by the autonomous vehicle in combination with the navigation map corresponding to the front road section, a plurality of high-precision maps sent by a plurality of autonomous vehicles may be received at the same time, then the plurality of high-precision maps sent by the autonomous vehicles are scored respectively, and the high-precision map with the highest scoring value is selected from the plurality of high-precision maps, the scoring value of which are greater than the preset threshold, to generate a standard high-precision map.

It can be understood that, the obstacle information, the road information, the traffic light information, the intersection information, the parking area information, the stop line information, the crosswalk information, and the like may be collected by the radar and the camera in the autonomous vehicle. The current location of the autonomous vehicle may be obtained through the inertial navigator, and then the high-precision map may be generated according to the obstacle information, the road information, the traffic light information, the intersection information, the parking area information, the stop line information, the crosswalk information, and the like collected by the radar or the camera.

As a possible implementation, the autonomous vehicle performs detection by an ultrasonic sensor of the radar in the autonomous vehicle according to the sonar principle. When the transmitted ultrasonic wave encounters an obstacle, a reflected wave is generated, and after the reflected wave is received by the sensor, the controller calculates the distance between the obstacle and the radar transmitter according to the transmitted wave and the reflected wave, to obtain the obstacle information. Currently, the common automotive radars include ultrasonic radar, millimeter wave radar, and laser radar.

As a possible implementation, the autonomous vehicle collects image information of the front road section without the corresponding high-precision map through the image sensor of the camera in the autonomous vehicle, and then uploads the collected image to the server for generating a high-precision map. The camera applied to the autonomous vehicle may have a front-view camera and a dual camera. The specific type of camera is determined according to the actual situation, which is not limited herein.

With the high-precision map generation method of embodiments of the present disclosure, the local high-precision map in the autonomous vehicle and the destination of the autonomous vehicle are obtained, and further, it is determined whether there is a corresponding high-precision map on the front road section according to the destination and the local high-precision map, and when there is no corresponding high-precision map on the front road section, the driver is prompted to switch to the manual driving mode, and after the autonomous vehicle enters the front road section, map information is collected by the radar and the camera of the autonomous vehicle, and the high-precision map is generated according to the collected map information. Therefore, by obtaining the destination of the autonomous vehicle and the local high-precision map, when it is determined that there is no corresponding high-precision map on the front road section, map information is further collected to generate the high-precision map, such that the use area of the high-precision map is expanded, and the driving safety of the vehicle is improved, which is more advantageous to the popularization of autonomous vehicles and the improvement of urban traffic conditions.

As a possible implementation, on the basis of the embodiment illustrated in FIG. 1, referring to FIG. 2, step 104 may further include followings.

At step 201, the current location of the autonomous vehicle is obtained.

Specifically, the current position of the current autonomous vehicle may be acquired by a global positioning system (GPS).

At step 202, it is determined whether the current location is an entry point of the road.

In the embodiments of the present disclosure, it is determined whether the current position of the autonomous vehicle is the entry point of the road. When the current position is not the entry point of the road, the vehicle keeps traveling until the current position of the autonomous vehicle is obtained as the entry point of the road, and then step 203 is performed in sequence. When the current location is the entry point of the road, step 203 is directly performed.

At step 203, when the current location is the entry point of the road, a high-precision map starting from the entry point of the road is generated according to the point cloud data and the image data, until the autonomous vehicle exits the exit point of the road, wherein the high-precision map from the entry point of the road to the exit point of the road is a high-precision map of the road.

The point cloud data and the time data both include a timestamp, and the timestamp is usually a sequence of characters for uniquely identifying a certain moment of time.

Specifically, when it is determined that the front road section does not have the corresponding high-precision map according to the destination of the autonomous vehicle and the local high-precision map, and it is determined that the current position of the autonomous vehicle is the entry point of the road section without a high-precision map, point cloud data and image data are collected by the radar and the camera in the autonomous vehicle. Further, the length, width and position coordinates of the road at the entry point are acquired according to the point cloud data, and the type of the road, the type and color of the marking line are acquired according to the image data, for example, road information such as a stop line, a solid line, a broken line, a yellow line, and a white line of the road is acquired according to the image.

Further, the length, the width, the position coordinate and the type of the road are matched with the type and color of the marking line according to the time stamp, such that the point cloud data and the image data of the same time stamp are combined to generate a high-precision map at the entry point of the road. When the current position of the autonomous vehicle is acquired as the exit point, the radar and the camera are controlled to stop collecting point cloud data and image data. The high-precision map starting from the entry point of the road is generated based on the point cloud data and the image data, until the autonomous vehicle exits the exit point of the road, that is, the high-precision map between the entry point of the road and the exit point is generated as the high-precision map of the road.

With the high-precision map generation method of embodiments of the present disclosure, it is further determined whether the current location is the entry point of the road by acquiring the current location of the autonomous vehicle, and when the current location is the entry point of the road, the high-precision map starting from the entry point of the road is generated according to the point cloud data and the image data until the autonomous vehicle exits the exit point of the road, wherein the high-precision map between the entry point of the road and the exit point is the high-precision map of the road. Therefore, the high-precision map of the road can be generated by collecting the point cloud data and the image data, which improves the acquisition precision of the high-precision map, such that that the road condition of the front road section can be accurately determined, and the safety of the autonomous vehicle is improved.

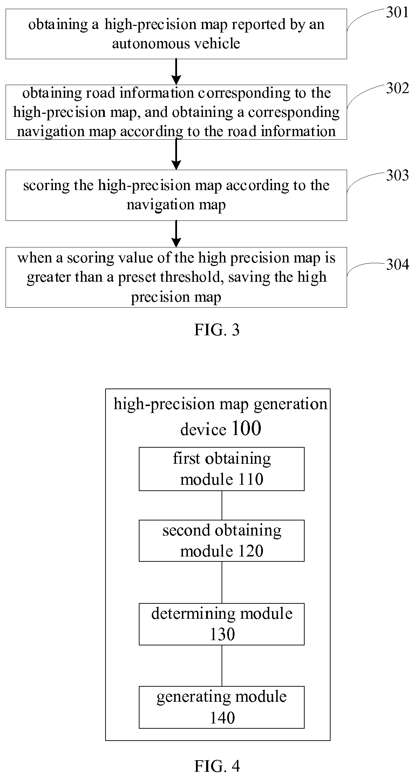

In order to implement the above-mentioned embodiments, the present disclosure also provides another high-precision map generation method. FIG. 3 is a schematic flowchart of a high-precision map generation method according to embodiments of the present disclosure.

As illustrated in FIG. 3, the high-precision map generation method includes the following steps.

At step 301, a high-precision map reported by an autonomous vehicle is obtained.

Specifically, when it is detected that there is no high-precision map corresponding to the front road section of the autonomous vehicle, the autonomous vehicle collects the map information through the radar and the camera in the autonomous vehicle after entering the road section, and generates the high-precision map, and further reports the generated high-precision map to the server. Therefore, the high-precision map reported by the autonomous vehicle can be obtained from the server.

It can be understood that the obstacle information, the road information, the traffic light information, the intersection information, the parking area information, the stop line information, the crosswalk information, and the like may be collected by the radar and the camera in the autonomous vehicle. The current location of the autonomous vehicle may be obtained through the inertial navigator, and then the high-precision map may be generated according to the obstacle information, the road information, the traffic light information, the intersection information, the parking area information, the stop line information, the crosswalk information, and the like collected by the radar or the camera.

As a possible implementation, the high-precision map reported by the autonomous vehicle may be made by regions. The high-precision map may be generated at the road level, that is, between intersections. Certainly, the high precision-map of many roads may be generated. Since the autonomous vehicle reports the location during generating the high-precision map, the high-precision map may be uploaded to the server when the high-precision map satisfies the condition of being between intersections.

At step 302, road information corresponding to the high-precision map is obtained, and a corresponding navigation map is obtained according to the road information.

Specifically, the corresponding road information may be acquired according to the generated high-precision map, and the corresponding navigation map may be acquired according to the road information.

The navigation map refers to an ordinary electronic map applicable to the software for navigating on the GPS device, which is mainly used for realizing path planning and navigation function.

At step 303, the high-precision map is scored according to the navigation map.

At step 304, when a scoring value of the high-precision map is greater than a preset threshold, the high-precision map is saved.

The preset threshold refers to a preset value for determining whether the high-precision map reported by the autonomous vehicle meets the standard.

In the embodiments of the present disclosure, the server scores the high-precision map reported by the autonomous vehicle in combination with the navigation map corresponding to the road information, and when the scoring value of the high-precision map is greater than the preset threshold, the server determines that the uploaded high-precision map meets the requirements, and further generates and saves a standard high-precision map, so that the high-precision map can be downloaded from the server when other autonomous vehicles are driving through the area.

As a possible implementation, when the server scores the high-precision map reported by the autonomous vehicle in combination with the navigation map corresponding to the road information, a plurality of high-precision maps sent by a plurality of autonomous vehicles may be received at the same time, then the plurality of high-precision maps sent by the autonomous vehicles are scored respectively, and the high-precision map with the highest scoring value is selected from the plurality of the high-precision maps, the scoring values of which are greater than the preset threshold, to generate the standard high-precision map, and further save the generated high-precision map.

Further, when other autonomous vehicles are traveling on the road section, the server may also receive a high-precision map request message from other autonomous vehicles, wherein the high-precision map request message includes road information, and further, obtain the high-precision map saved according to the road information, and send the high-precision map to other autonomous vehicles. In this way, when other autonomous vehicles travel through the area, the high-precision map can be directly obtained from the server.

With the high-precision map generation method according to the embodiments of the present disclosure, the high-precision map reported by the autonomous vehicle is obtained, and road information corresponding to the high-precision map is obtained, and then the corresponding navigation map is obtained according to the road information, and the high-precision map is further scored according to the navigation map. When the scoring value of the high-precision map is greater than the preset threshold, the high-precision map is saved. Therefore, when there is no corresponding high-precision map on an area, by uploading the high-precision map collected by the autonomous vehicle to the server, and scoring the high-precision map according to the navigation map, the high-precision map conforming to the standard can be obtained, and the collection capability of the high-precision map is improved, such that the corresponding area of the high-precision map is expanded, which is advantageous to the popularization of the autonomous vehicles.

In order to implement the above embodiments, the present disclosure also provides a high-precision map generation device.

FIG. 4 is a schematic block diagram of a high-precision map generation device according to an embodiment of the present disclosure.

As illustrated in FIG. 4, the high-precision map generation device 100 includes a first obtaining module 110, a second obtaining module 120, a determining module 130, and a generating module 140.

The first obtaining module 110 is configured to obtain a local high-precision map in an autonomous vehicle.

The second obtaining module 120 is configured to obtain a destination of the autonomous vehicle.

The determining module 130 is configured to determine whether there is a high-precision map corresponding to a front road section according to the destination and the local high-precision map.

The generating module 140 is configured to prompt a driver of the autonomous vehicle to switch to a manual driving mode when there is no high-precision map, and generate a high-precision map according to map information collected by a radar and a camera of the autonomous vehicle after the autonomous vehicle enters the front road section.

As a possible implementation, the high-precision map generation device 100 further includes a processing module.

The processing module is configured to transmit the high-precision map to a server, wherein the server scores the high-precision map according to a navigation map corresponding to the front road section, and when a scoring value is greater than a preset threshold, the server adopts the high-precision map.

As a possible implementation, the generating module 140 may specifically include an obtaining unit, a determining unit and a generating unit.

The obtaining unit is configured to obtain a current position of the autonomous vehicle.

The determining unit is configured to determine whether the current location is an entry point of a road.

The generating unit is configured to, when the current location of the autonomous vehicle is the entry point of the road, generate a high-precision map starting from the entry point of the road according to the point cloud data and the image data, until the autonomous vehicle travels away from the exit point of the road, the high-precision map between the entry point of the road and the exit point of the road being a high-precision map of the road.

As a possible implementation manner, the generating unit may further be configured to:
obtain a length, a width and a position coordinate of the road according to the point cloud data;
obtain a type of the road, a type and color of a marking line according to the image data; and
generate the high-precision map starting from the entry point of the road according to the length, width, position coordinate and type of the road, and the type and color of the marking line.

With the high-precision map generation device of embodiments of the present disclosure, the local high-precision map in the autonomous vehicle and the destination of the autonomous vehicle are obtained, and further, it is determined whether there is a corresponding high-precision map on the front road section according to the destination and the local high-precision map, and when there is no corresponding high-precision map on the front road section, the driver is prompted to switch to the manual driving mode, and after the autonomous vehicle enters the front road section, map information is collected by the radar and the camera of the autonomous vehicle, and the high-precision map is generated according to the collected map information. Therefore, by obtaining the destination of the autonomous vehicle and the local high-precision map, when it is determined that there is no corresponding high-precision map on the front road section, map information is further collected to generate the high-precision map, such that the use area of the high-precision map is expanded, and the driving safety of the vehicle is improved, which is more advantageous to the popularization of autonomous vehicles and the improvement of urban traffic conditions.

In order to implement the above embodiments, the present disclosure also provides another high-precision map generation device.

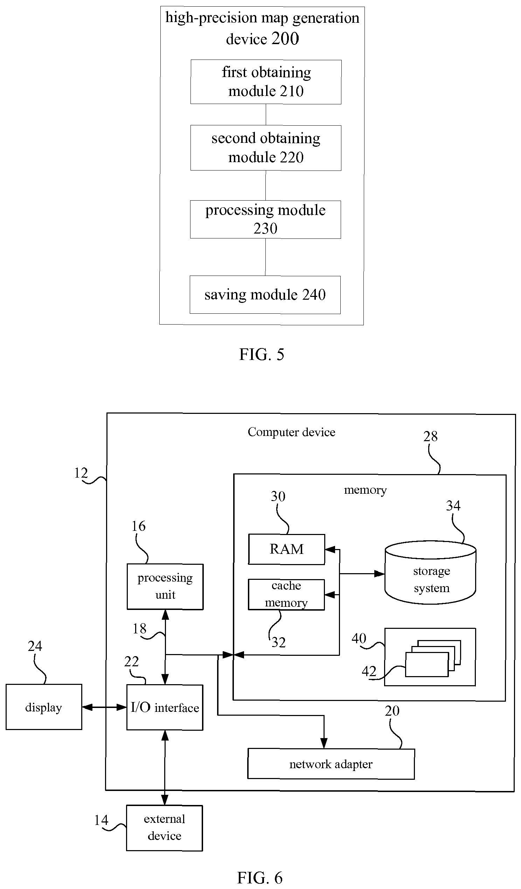

FIG. 5 is a schematic block diagram of another high-precision map generation device according to embodiments of the present disclosure.

As illustrated in FIG. 5, the high-precision map generation device 200 includes a first obtaining module 210, a second obtaining module 220, a processing module 230, and a saving module 240.

The first obtaining module 210 is configured to obtain a high-precision map reported by an autonomous vehicle.

The second obtaining module 220 is configured to obtain road information corresponding to the high-precision map, and obtain a corresponding navigation map according to the road information.

The processing module 230 is configured to score the high-precision map according to the navigation map.

The saving module 240 is configured to save the high-precision map when a scoring value of the high-precision map is greater than a preset threshold.

As a possible implementation, the high-precision map generation device 200 further includes a receiving and a sending module.

The receiving module is configured to receive a high-precision map request message from another autonomous vehicle, wherein the high-precision map request message includes road information.

The sending module is configured to obtain the saved high-precision map according to the road information and send the high-precision map to the another autonomous vehicle.

With the high-precision map generation device of embodiments of the present disclosure, the high-precision map reported by the autonomous vehicle is obtained, and road information corresponding to the high-precision map is obtained, and then the corresponding navigation map is obtained according to the road information, and the high-precision map is further scored according to the navigation map. When the scoring value of the high-precision map is greater than the preset threshold, the high-precision map is saved. Therefore, when there is no corresponding high-precision map on an area, by uploading the high-precision map collected by the autonomous vehicle to the server, and scoring the high-precision map according to the navigation map, the high-precision map conforming to the standard can be obtained, and the collection capability of the high-precision map is improved, such that the corresponding area of the high-precision map is expanded, which is advantageous to the popularization of the autonomous vehicles.

In order to implement the above embodiments, the present disclosure further provides a computer device. The computer device includes a memory, a processor, and a computer program stored on the memory and operable on the processor. When the computer program is executed by the processor, the high-precision map generation method as described in the above embodiments is implemented.

In order to implement the above embodiments, the present disclosure further provides a non-transitory computer readable storage medium having a computer program stored thereon. When the computer program is executed by a processor, the high-precision map generation method as described in the above embodiments is implemented.

In order to implement the above embodiments, the present disclosure also provides a computer program product. When instructions in the computer program product are executed by a processor, the high-precision map generation method as described in the above embodiments is implemented.

FIG. 6 illustrates a block diagram of an exemplary computer device suitable for use in implementing embodiments of the present disclosure. The computer device 12 illustrated in FIG. 6 is merely an example and should not impose any limitation on the function and scope of embodiments of the present disclosure.

As illustrated in Fig. 6, the computer device 12 is embodied in the form of a general-purpose computer device. Components of the computer device 12 may include, but are not limited to, one or more processors or processing units 16, a system memory 28, and a bus 18 that connects different system components, including the system memory 28 and the processing unit 16.

The bus 18 represents one or more of several bus structures, including a storage bus or a storage controller, a peripheral bus, an accelerated graphics port and a processor or a local bus with any bus structure in the plurality of bus structures. For example, these architectures include but not limited to an ISA (Industry Standard Architecture) bus, a MAC (Micro Channel Architecture) bus, an enhanced ISA bus, a VESA (Video Electronics Standards Association) local bus and a PCI (Peripheral Component Interconnection) bus.

The computer device 12 typically includes various computer system readable mediums. These mediums may be any usable medium that may be accessed by the computer device 12, including volatile and non-volatile mediums, removable and non-removable mediums.

The system memory 28 may include computer system readable mediums in the form of volatile medium, such as a RAM (Random Access Memory) 30 and/or a cache memory 32. The computer device 12 may further include other removable/non-removable, volatile/non-volatile computer system storage mediums. Only as an example, the storage system 34 may be configured to read from and write to non-removable, non-volatile magnetic mediums (not illustrated in Fig. 5, and usually called "a hard disk driver"). Although not illustrated in Fig. 5, a magnetic disk driver configured to read from and write to the removable non-volatile magnetic disc (such as "a diskette"), and an optical disc driver configured to read from and write to a removable non-volatile optical disc (such as a CD-ROM, a DVD-ROM or other optical mediums) may be provided. Under these circumstances, each driver may be connected with the bus 18 by one or more data medium interfaces. The system memory 28 may include at least one program product. The program product has a set of program modules (for example, at least one program module), and these program modules are configured to execute functions of respective embodiments of the present disclosure.

A program/utility tool 40, having a set (at least one) of program modules 42, may be stored in the system memory 28. Such program modules 42 include but not limited to an operating system, one or more application programs, other program modules, and program data. Each or any combination of these examples may include an implementation of a networking environment. The program module 42 usually executes functions and/or methods described in embodiments of the present disclosure.

The computer device 12 may communicate with one or more external devices 14 (such as a keyboard, a pointing device, and a display 24), may further communicate with one or more devices enabling a user to interact with the device, and/or may communicate with any device (such as a network card, and a modem) enabling the computer device 12 to communicate with one or more other computer devices. Such communication may occur via an Input / Output (I/O) interface 22. Moreover, the computer device 12 may further communicate with one or more networks (such as LAN (Local Area Network), WAN (Wide Area Network) and/or public network, such as Internet) via a network adapter 20. As illustrated in Fig. 5, the network adapter 20 communicates with other modules of the computer device 12 via the bus 18. It should be understood that, although not illustrated in Fig. 7, other hardware and/or software modules may be used in combination with the computer device 12, including but not limited to: microcode, device drivers, redundant processing units, external disk drive arrays, RAID (Redundant Array of Independent Disks) systems, tape drives, and data backup storage systems, etc.

The processing unit 16, by operating programs stored in the system memory 28, executes various function applications and data processing, for example implements the high-precision map generation method provided in embodiments of the present disclosure.

In the description of the present disclosure, reference throughout this specification to "an embodiment," "some embodiments," "an example," "a specific example," or "some examples," means that a particular feature, structure, material, or characteristic described in connection with the embodiment or example is included in at least one embodiment or example of the present disclosure. Thus, the appearances of the phrases in various places throughout this specification are not necessarily referring to the same embodiment or example of the present disclosure. Furthermore, the particular features, structures, materials, or characteristics may be combined in any suitable manner in one or more embodiments or examples. Without a contradiction, the different embodiments or examples and the features of the different embodiments or examples can be combined by those skilled in the art.

In addition, terms such as "first" and "second" are used herein for purposes of description and are not intended to indicate or imply relative importance or significance. Furthermore, the feature defined with "first" and "second" may comprise one or more this feature distinctly or implicitly. In the description of the present disclosure, "a plurality of' means two or more than two, unless specified otherwise.

The flow chart or any process or method described herein in other manners may represent a module, segment, or portion of code that comprises one or more executable instructions to implement the specified logic function(s) or that comprises one or more executable instructions of the steps of the progress. Although the flow chart shows a specific order of execution, it is understood that the order of execution may differ from that which is depicted. For example, the order of execution of two or more boxes may be scrambled relative to the order shown.

The logic and/or step described in other manners herein or shown in the flow chart, for example, a particular sequence table of executable instructions for realizing the logical function, may be specifically achieved in any computer readable medium to be used by the instruction execution system, device or equipment (such as the system based on computers, the system comprising processors or other systems capable of obtaining the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples of the computer readable medium comprise but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above exemplifying method of the present disclosure may be achieved by commanding the related hardware with programs. The programs may be stored in a computer readable storage medium, and the programs comprise one or a combination of the steps in the method embodiments of the present disclosure when run on a computer.

In addition, each function cell of the embodiments of the present disclosure may be integrated in a processing module, or these cells may be separate physical existence, or two or more cells are integrated in a processing module. The integrated module may be realized in a form of hardware or in a form of software function modules. When the integrated module is realized in a form of software function module and is sold or used as a standalone product, the integrated module may be stored in a computer readable storage medium.

The storage medium mentioned above may be read-only memories, magnetic disks, CD, etc.

Although explanatory embodiments have been shown and described, it would be appreciated by those skilled in the art that the above embodiments cannot be construed to limit the present disclosure, and changes, alternatives, and modifications can be made in the embodiments without departing from spirit, principles and scope of the present disclosure.

## Claims

1. A high-precision map generation method, comprising:
obtaining a local high-precision map in an autonomous vehicle;
obtaining a destination of the autonomous vehicle;
determining whether there is a high-precision map corresponding to a front road section according to the destination and the local high-precision map; and
when there is no high-precision map corresponding to the front road section, prompting a driver of the autonomous vehicle to switch to a manual driving mode, and after the autonomous vehicle enters the front road section, collecting map information by a radar and a camera of the autonomous vehicle, and generating the high-precision map according to the map information.

2. The high-precision map generation method according to claim 1, further comprising:
sending the high-precision map to a server, wherein the server scores the high-precision map according to a navigation map corresponding to the front road section, and when a scoring value is greater than a preset threshold, the server adopts the high-precision map.

3. The high-precision map generation method according to claim 1, wherein the map information comprises point cloud data and image data collected by the radar and the camera, and generating the high-precision map according to the map information comprises:
obtaining a current location of the autonomous vehicle;
determining whether the current location is an entry point of a road; and
when the current location is the entry point of the road, generating a high-precision map starting from the entry point of the road according to the point cloud data and the image data, until the autonomous vehicle travels away from an exit point of the road, wherein the high-precision map between the entry point and the exit point of the road is the high-precision map of the road.

4. The high-precision map generation method according to claim 3, wherein each of the point cloud data and the image data includes a time stamp, and generating the high-precision map starting from the entry point of the road according to the point cloud data and the image data comprises:
obtaining a length, a width, and a position coordinate of the road according to the point cloud data;
obtaining a type of the road, a type and a color of a marking line according to the image data; and
generating the high-precision map starting from the entry point of the road according to the length, width, position coordinates and type of the road, and the type and color of the marking line.

5. A high-precision map generation device, comprising:
a first obtaining module, configured to obtain a local high-precision map in an autonomous vehicle;
a second obtaining module, configured to obtain a destination of the autonomous vehicle;
a determining module, configured to determine whether there is a high-precision map corresponding to a front road section according to the destination and the local high-precision map; and
a generating module, configured to prompt a driver of the autonomous vehicle to switch to a manual driving mode when there is no high-precision map corresponding to the front road section, and generate the high-precision map according to map information collected by a radar and a camera of the autonomous vehicle after the autonomous vehicle enters the front road section.

6. The high-precision map generation device according to claim 5, further comprising:
a processing module, configured to send the high-precision map to a server, wherein the server scores the high-precision map according to a navigation map corresponding to the front road section, and when a scoring value is greater than a preset threshold, the server adopts the high-precision map.

7. The high-precision map generation device according to claim 5, wherein the map information comprises point cloud data and image data collected by the radar and the camera, and the generating module comprises:
an obtaining unit, configured to obtain a current location of the autonomous vehicle;
a determining unit, configured to determine whether the current location is an entry point of a road; and
a generating unit, configured to, when the current location is the entry point of the road, generate a high-precision map starting from the entry point of the road according to the point cloud data and the image data, until the autonomous vehicle travels away from an exit point of the road, wherein the high-precision map between the entry point and the exit point of the road is the high-precision map of the road.

8. The high-precision map generation device according to claim 7, wherein each of the point cloud data and the image data includes a time stamp, and the generating unit is configured to:
obtain a length, a width, and a position coordinate of the road according to the point cloud data;
obtain a type of the road, a type and a color of a marking line according to the image data; and
generate the high-precision map starting from the entry point of the road according to the length, width, position coordinates and type of the road, and the type and color of the marking line.

9. A computer device, comprising: a memory, a processor, and a computer program stored on the memory and operable on the processor, wherein when the computer program is executed by the processor, the high-precision map generation method according to any of claims 1-4 is implemented.

10. A non-transitory computer readable storage medium having a computer program stored thereon, wherein when the computer program is executed by a processor, the high-precision map generation method according to any of claims 1-6 is implemented.
